(19) Europäisches Patentamt / European Patent Office / Office européen des brevets

(11) **EP 3 505 241 B1**

(12) **EUROPÄISCHE PATENTSCHRIFT**

(45) Veröffentlichungstag und Bekanntmachung des Hinweises auf die Patenterteilung:
**25.06.2025   Patentblatt 2025/26**

(21) Anmeldenummer: **19154250.5**

(22) Anmeldetag: **13.07.2012**

(51) Internationale Patentklassifikation (IPC):
**B01J 21/04** (2006.01)       **B01J 23/10** (2006.01)
**B01J 37/03** (2006.01)       **B01J 23/63** (2006.01)
**B01J 35/00** (2024.01)

(52) Gemeinsame Patentklassifikation (CPC):
(C-Sets verfügbar)
**B01J 23/10; B01J 21/04; B01J 23/63;**
**B01J 35/613; B01J 37/033;** B01J 35/30;
B01J 35/615; B01J 37/0045; B01J 37/0201;
B01J 37/0203; B01J 2235/00; B01J 2235/15;
B01J 2523/00                              (Forts.)

(54) **VERFAHREN ZUR HERSTELLUNG VON KOMPOSITEN AUS ALUMINIUMOXID UND CER-/ ZIRKONIUM-MISCHOXIDEN**

METHOD FOR PRODUCING COMPOSITES OUT OF ALUMINIUM OXIDE AND CERIUM/ ZIRCONIUM MIXED OXIDES

PROCÉDÉ DE FABRICATION DE COMPOSITES EN OXYDE D'ALUMINIUM ET OXYDES MÉLANGÉS CÉRIUM/ZIRCONIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **14.07.2011   DE 102011107702**
                  **16.12.2011   EP 11009902**

(43) Veröffentlichungstag der Anmeldung:
**03.07.2019   Patentblatt 2019/27**

(62) Dokumentnummer(n) der früheren Anmeldung(en) nach Art. 76 EPÜ:
**12740471.3 / 2 731 710**

(73) Patentinhaber: **SASOL Germany GmbH**
**20537 Hamburg (DE)**

(72) Erfinder:
• **Paeger, Anja**
**25554 Landrecht (DE)**
• **Schöneborn, Marcos**
**22303 Hamburg (DE)**
• **Glöckler, Reiner**
**25693 St. Michaelisdonn (DE)**

(74) Vertreter: **Müller Schupfner & Partner Patent- und Rechtsanwaltspartnerschaft mbB (Hamburg)**
**Schellerdamm 19**
**21079 Hamburg (DE)**

(56) Entgegenhaltungen:
**WO-A1-2006/119549     US-B1- 6 306 794**
**US-B1- 6 831 036**

Bemerkungen:
Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)

C-Sets
B01J 2523/00, B01J 2523/31, B01J 2523/3712,
B01J 2523/48;
B01J 2523/00, B01J 2523/36, B01J 2523/3706,
B01J 2523/3712, B01J 2523/48;
B01J 2523/00, B01J 2523/3706, B01J 2523/3712,
B01J 2523/48

**Beschreibung**

Die vorliegende Erfindung betrifft ein Verfahren zur Herstellung von Kompositen umfassend Aluminiumoxid und Cer-/ Zirkonium-Mischoxide, nachfolgend kurz Al/Ce/Zr-Oxidkomposit(e) genannt. Derartig hergestellte Al/Ce/Zr-Oxidkomposite weisen eine erhöhte Thermostabilität auf.

Al/Ce/Zr-Oxidkomposite mit eingelagerten katalytisch aktiven Edelmetallen sind bekannt und werden z.B. zur katalytischen Abgasnachbehandlung, insbesondere von Verbrennungsgasen, eingesetzt, die den Brennraum oder die Brennkammer von Fahrzeugen verlassen haben. Solche Fahrzeugkatalysatoren bestehen meistens aus mehreren Komponenten. Als Träger dient ein temperaturstabiler Wabenkörper aus Keramik, in der Regel Cordierit oder Metallfolien, der eine Vielzahl dünnwandiger Kanäle aufweist. Auf dem Träger befindet sich der so genannte Washcoat. Dieser umfasst poröses Aluminiumoxid ($Al_2O_3$) sowie Sauerstoffspeicherkomponenten. In dem Washcoat sind weiterhin katalytisch aktive Edelmetalle eingelagert. Bei modernen Abgaskatalysatoren sind dies Platin, Rhodium und/oder Palladium. Der keramische Träger ist mithilfe spezieller Lagermatten, etwa aus Hochtemperaturwolle, seltener in Kombination mit Drahtgestricken, in einem metallischen Gehäuse gelagert. Waschcoats enthaltend Al/Ce/Zr-Oxidkomposite sind zur Abgasnachbehandlung von Verbrennungsmotoren bekannt, wobei die Cer/Zirkonium-Mischoxide als Sauerstoffspeicherkomponente wirken. Die Al/Ce/Zr-Oxidkomposite dieser Erfindung finden Verwendung in obigen Fahrzeugkatalysatoren.

In der WO 2006/070201 A2 wird eine verbesserte Variante zur Herstellung von Mischoxiden aus Aluminiumoxid, Zirkoniumoxid und fakultativ mindestens einem Vertreter aus $CeO_2$, $La_2O_3$, $Nd_2O_3$, $Pr_6O_{11}$, $Sm_2O_3$, $Y_2O_3$ und ggf. weiteren Seltenerd-Oxiden beschrieben. Die Herstellung beruht auf einer gemeinsamen Fällung der entsprechenden Salze. Die Herstellung erfolgt über eine gemeinsame Fällung aller beteiligten Oxide, ausgehend von einer Metallsalzlösung, wobei der pH-Wert während der Fällung im Bereich von 8,5 +/- 1 eingestellt wird. Die Fällung erfolgte durch Zugabe von Alkalihydroxiden, insbesondere Natronlauge.

Die WO 2008/113457 A1 beschreibt die Herstellung von Al/Ce/Zr-Oxidkompositen basierend auf Mischungen von separat hergestelltem Aluminiumoxid und Cer/Zirkonium-Mischoxid.

US 6306794 B1 offenbart ein Verfahren zum Herstellen von Kompositen, welche nicht über ein Böhmit und unter hydrothermaler Alterung erhalten wurden und dementsprechend eine schlechtere Thermostabilität zeigen.

In der US 5,883,037 wird auf die Bedeutung der Thermostabilität der Kompositmaterialien eingegangen. Der dort beschriebene Prozess sieht ein mehrstufiges Verfahren vor, wonach zunächst Ce-, Zr- und ggf. Pr-Salze durch pH-Werterhöhung gefällt werden und ein Niederschlag isoliert wird. Der Niederschlag wird mit Alumina unter Mischen in Kontakt gebracht, isoliert und nachfolgend einer Trocknung und Kalzinierung unterzogen. Das Alumina ist vorzugsweise stabilisiert durch Fremddionen aus der Gruppe der Seltenen Erden, Ba, Zr oder Si. Die über Fällung hergestellten Ce/Zr-Mischoxide und Ce/Zr/Pr-Mischoxide können ggf. zusätzlich stabilisiert werden, durch z.B. mindestens ein Element der Gruppe VIII, Bismut und/oder ein weiteres Seltenerd-Element. Ein Nachteil dieses Herstellungsverfahren liegt in der geringen Homogenität des erhaltenen Materials begründet.

Die EP 1172139 A1 beschreibt die Herstellung homogener $Al_2O_3/CeO_2/ZrO_2/Y_2O_3/La_2O_3$ - Mischoxide über Co-Fällung sowie deren Thermostabilitäten. In dem beschriebenen Prozess wurden die aus gemeinsamer Fällung resultierenden Al-Ce-Zr-Y-La- Hydroxid-Zwischenstufen kalziniert und so in die Oxide überführt.

Die WO 2006/119549 A1 beschreibt einen Prozess, bei dem einer sauren Böhmit Suspension eine Lösung von Metallsalzen zugesetzt wird, um eine zweite Suspension zu erhalten. Die Fällung erfolgt über Zutropfen der zweiten Suspension in eine alkalische Lösung. Das Verfahren der WO 2006/119549 A1 führt, wie auch durch die Beispiele 1 und 2 gezeigt, zur Ausbildung diskreter Inseln des Ce/Zr/Seltenerd-Mischoxids neben dem Aluminiumoxid. Ein sehr ähnlicher Prozess wird im Vergleichsbeispiel 3, 14 und 15 der US 6,831,036 beschrieben. Die angegebenen Restoberflächen liegen nach Kalzinierung bei 1000°C für 3 h prozessbedingt bei maximal 39 $m^2$/g.

Die WO 2012/67654 A1 beschreibt einen Prozess, bei dem Al/Ce/Zr/ Seltenerd -Oxidkomposite über eine zweistufige Fällung hergestellt werden. Im ersten Schritt wird hierbei ein "Aluminium-Hydrat" und ggf. Seltenerd-Hydroxid durch Fällung von Aluminiumsulfat mit Natrium-aluminat hergestellt. Nach erneutem Ansäuern der Suspension wird dann die Ce/Zr/Seltenerd -Komponente durch Zugabe der entsprechenden Salzlösung in diese Suspension und erneuter pH-Wert Erhöhung ausgefällt. Die so erhaltenen Al/Ce/Zr/ Seltenerd - Oxidkomposite sollen nach Kalzinierung bei 1100°C für 5 Stunden eine Oberfläche (in $m^2$/g) aufweisen, die sich aus der Formel SA = 0,8235 · [Al] + 11,157 ergibt. Die Restoberfläche der Materialien nach Kalzinierung bei 1200°C für 5 Stunden wird über die Formel SA = 0,3 · [Al] + 7 angegeben. Die WO 2012/67654 A1 ist nachveröffentlicht. Die zugehörige Prioritätsanmeldung betrifft einen anderen als den oben angegebenen Gegenstand.

Aufgabe der vorliegenden Erfindung ist es, verbesserte Al/Ce/Zr/(ggf. Seltenerd)- Oxidkomposite bereitzustellen, die deutlich höhere thermische Oberflächenstabilitäten aufweisen, insbesondere bei Temperaturen von 1100°C und mehr (z.B. für 24 Stunden und mehr). Oberflächenstabilität in diesem Sinne ist der (weitgehende) Erhalt der Oberfläche bei hohen Temperaturen gemessen nach BET. Gleichzeitig soll ein maximaler Grad an Homogenität erzielt werden. Unter Homogenität ist hierbei eine gleichmäßige Verteilung der Phasen $Al_2O_3$ und Ce/Zr/Seltenerd-Mischoxid ohne Ausbildung diskreter Inseln gemeint.

Die Aufgabe wird gelöst durch ein Verfahren nach Anspruch 1. Bevorzugte Ausführungsformen sind Gegenstand der Unteransprüche und/oder nachfolgend beschrieben.

Es wurde festgestellt, dass die nach dem erfindungsgemäßen Verfahren erhaltenen Al/Ce/Zr Oxidkomposite, enthaltend ggf. weitere Seltenerdoxidkomponenten, zumindest das Ce/Zr-Oxid in Form einer "solid solution" (festen Lösung) enthalten. Dies kann durch Röntgenpulverbeugung nachgewiesen werden. Weiterhin liegen $Al_2O_3$ und die Ce-Zr-(ggf. Seltenerd)-Mischoxide vollständig homogen verteilt nebeneinander vor, wie mittels EDX (energiedispersiver Röntgenanalyse) und Element-Mapping nachgewiesen wurde. Es wurden keine Domänen für Einzelmetalloxide detektiert. Die Angabe der Bestandteile $Al_2O_3$ und Ce-Zr-Mischoxide bzw. Ce-Zr-(ggf. Seltenerd) -Mischoxide bzw. Al/-Ce/Zr/(ggf. Seltenerd)- Oxidkomposite schließt nicht aus, dass andere Metalloxide Bestandteile des Mischoxids oder des Komposits sind. Vorzugsweise bestehen die Komposite ausschließlich aus $Al_2O_3$ und aus Ce-Zr-(ggf. Seltenerd)-Mischoxid.

Der in dieser Erfindung beschriebene Prozess unterscheidet sich vom weiter oben beschriebenen Stand der Technik dadurch, dass eine wässrige, alkalische Böhmit-Suspension (Aufschlämmung) eingesetzt wird und die Fällung in dieser Suspension in Gegenwart löslicher Metallsalze unter Bildung eines Ce-Zr-(ggf. Seltenerd-)Hydroxid Präzipitats erfolgt, wobei das Ce-Zr-(ggf. Seltenerd-)Hydroxid Präzipitat (ebenso wie die spätere Solid-Solution) in der Böhmitmatrix homogen verteilt vorliegt. Der Grad an Homogenität und die damit verbundene effektive Trennung der Ce-Zr-(ggf. Seltenerd)-Mischoxidkristallite durch das Aluminiumoxid wird erzielt durch eine sehr homogene Fällung, bei der die Böhmitpartikel innerhalb der Suspension auch im alkalischen Milieu nicht sedimentieren. Der konstant hohe pH-Wert sorgt dabei für eine gleichmäßige Fällung der Ce/Zr/(ggf. Seltenerd)-Hydroxide, wodurch diese nach Kalzinierung in Form einer homogenen "solid solution" Vorliegen.

In dem hier beschriebenen Prozess kann auf die Verwendung von Alkali und insbesondere Natronlauge verzichtet werden. Die Entfernung von Alkali bzw. Natriumhydroxid aus dem Kompositmaterial ist für die Anwendung zwingend erforderlich und so stellt der Verzicht auf diese Komponente einen wesentlichen Vorteil dar.

Das erfindungsgemäße Verfahren umfasst insbesondere folgende Schritte:

(a) Bereitstellen einer Suspension umfassend Böhmit als Alumina-Precursor und Einstellen des pH-Wertes auf 8 bis 11,5 oder 9 bis 10,5, z.B. mit einer wässrigen Lösung aus Ammoniak. In einer bevorzugten Ausführungsart handelt es sich um eine wässrige Suspension von Böhmiten, die mit organischen Verbindungen modifiziert sind, die zumindest eine Carboxy-Gruppe und eine oder mehrere weitere Gruppen, ausgewählt aus Hydroxy-(-OH), Oxo- (O), Carboxy (-COO) und/oder Amin- (-NH) Gruppen, aufweist, z.B. Weinsäure oder Zitronensäure, vorzugsweise in Gewichtsanteilen von 0,1 bis 50 Gew.%, insbesondere 3 bis 12 Gew.%, bezogen auf das Trockengewicht des Böhmits.

(b) Herstellung einer wässrigen Metallsalzlösung, die Metallsalze von Cer und von Zirkonium und ggf. einem oder mehreren Seltenerd-Elementen umfasst. Zur Herstellung sind alle in Wasser löslichen Salze (z.B. Acetate, Nitrate, Chloride) geeignet. Löslich in diesem Sinne meint, dass sich unter Rühren bei der Umsetzungstemperatur eine stabile Lösung von zumindest 5 g Salz (bezogen auf die oxidische Form des Metalls) in 100 g Wasser einstellt. In einer bevorzugten Ausführungsart werden die Metallnitrate verwendet. Im Besonderen wird als Cer-Quelle Ammonium Cer(IV)-nitrat eingesetzt. Nach einer anderen bevorzugten Ausführungsform kann Cer(III)-nitrat eingesetzt werden, wenn die erhaltene Metallsalzlösung aufoxidiert wird, z.B. mit einer wässrigen $H_2O_2$-Lösung.

(c) Zusammenbringen der Suspension aus (a) mit der Metallsalzlösung aus (b), vorzugsweise bei pH-Werten von 6,5 bis 11, insbesondere 8 bis 10,5, besonders bevorzugt 8,5 bis 10, und unabhängig hiervon insbesondere bei Temperaturen von 5 bis 95°C, vorzugsweise 80 bis 95°C, oder Aussetzen der so erhalten Aufschlämmung diesen Temperaturen, wobei die Suspension aus (c) in wässriger Umgebung bei zumindest 90°C für zumindest 1 h hydrothermal gealtert wird, insbesondere:

(c1) Vorlage der Metallsalzlösung und Zutropfen der Alumina-Precursor Suspension und anschließendes Einstellen des pH-Wertes auf 6,5 bis 11, insbesondere 8 bis 10,5, besonders bevorzugt 8,5 bis 10.

(c2) Vorlage der Metallsalzlösung und Zutropfen der Alumina-Precursor Suspension und zeitgleich Einstellen des pH-Wertes auf 6,5 bis 11, insbesondere 8 bis 10,5 , besonders bevorzugt 8,5 bis 10.

(c3) Vorlage des Alumina-Precursors und gleichzeitiges Zutropfen der Metallsalzlösung und der Ammoniaklösung zur Einhaltung eines pH-Wertes von 6,5 bis 11, insbesondere 8 bis 10,5, besonders bevorzugt 8,5 bis 10.

(d) Abtrennen der wässrigen Lösung und Waschen des Feststoffes aus (c) mit Wasser.

(d1) Fakultativ wird die Suspension aus (c) hydrothermal gealtert (autoklaviert), dann anschließend filtriert und der Feststoff mit deionisiertem Wasser gewaschen.
(d2) Trocknen des Feststoffes aus (d), z.B. durch
(d2.1) Trocknen des Feststoffes, z.B. bei 120°C für 16 h, unter Wärmeeinwirkung.

(d2.2) Redispergieren des Feststoffes aus (d oder d1) und anschließende Sprühtrocknung. In einer besonderen Ausführungsform werden vor der Sprühtrocknung, und insbesondere erst nach Schritt (c) oder nach dem Redispergieren, eine oder mehrere weitere lösliche Verbindungen zugegeben. Als bevorzugte Salze werden Acetate, z.B. La-Acetat und/oder Salze der Erdalkalielemente, Seltenerdelemente, Zirkonium oder Silicium eingesetzt.

(e) Kalzinieren des Feststoffes aus (d oder d1 oder d2), z.B. im Temperaturbereich von 550-1200°C, bevorzugt im Bereich von 600-1000°C, insbesondere für zumindest 1 h.

Zum Einstellen des pH-Wertes können Stickstoffbasen Verwendung finden. Dies sind beispielsweise neben Ammoniak auch Harnstoff oder Urotropin. Insbesondere die Suspension umfassend Böhmit wird so auf den notwendigen pH-Wert eingestellt,

Das Komposit kann weiterhin eine oder mehrere Erdalkalielemente/-Verbindungen, Seltenerdelemente/-Verbindungen, Zirkonium und/oder Silicium, insbesondere Seltenerd-Elemente/-Verbindungen umfassen, wobei diese vorzugsweise vor der Trocknung, und insbesondere erst nach Schritt (c) oder sogar (d) in Form einer oder mehrerer weiterer löslicher Verbindungen zugegeben werden.

Nach einer Ausgestaltung wird die Suspension aus (c) in wässriger Umgebung hydrothermal gealtert, vorzugsweise bei zumindest 90°C und für zumindest 1 h, insbesondere bei zumindest 120°C und für zumindest 4 h.

Insbesondere werden zur Herstellung der Metallsalzlösung in Wasser lösliche Salze der Metalle verwendet, wie z.B. Acetate, Nitrate und/oder Chloride. Bei dem erfindungsgemäßen Verfahren wird vorzugsweise auf die Zugabe von Alkali- und/oder Erdalkalisalzen verzichtet, ausgenommen Bariumsalze, dass ggf. eingesetzt werden kann.

Das Ce/Zr (ggf. Seltenerd)-Oxid liegt in Form einer "solid solution" (festen Lösung) im Komposit vor und $Al_2O_3$ und die Ce-Zr-(ggf. Seltenerd)-Mischoxide/"solid solution" liegen nebeneinander homogen verteilt vor.

Bevorzugt weist das Al/Ce/Zr-Oxidkomposit 20 bis 80 Gew.%, vorzugsweise 40 bis 70 Gew.%, Aluminium, 5 bis 80 Gew.%, vorzugsweise 5 bis 40 Gew.%, Zirkonium, 5 bis 80 Gew.%, vorzugsweise 5 bis 40 Gew.% Cer, 0 bis 12 Gew.%, vorzugsweise 0,1 bis 9 Gew.% Seltenerdmetall(e) (RE) auf, berechnet als $Al_2O_3$, $ZrO_2$, $CeO_2$, $RE_2O_3$. Der Anteil der weiteren lösliche Verbindungen, die in Schritt (d2.2) nach dem Redispergieren zugesetzt werden, beträgt vorzugsweise 0,1 - 15 Gew.% (berechnet als Oxid) bezogen auf die Masse an $Al_2O_3$. Bevorzugte Seltenerd-Metalle sind Neodym, Praesodym, Yttrium und/oder Lanthan.

Die Al/Ce/Zr-Oxidkomposite weisen vorzugsweise auch nach 4 h und 1200°C noch Oberflächen von zumindest 20 $m^2$/g, vorzugsweise zumindest 40 $m^2$/g, auf.

Die Aluminium-/Cer-/Zirkonium-Mischoxide können in Fahrzeugkatalysatoren wie 3-Wege Katalysatoren (TWC) oder auch in anderen Komponenten wie $NO_x$-Speichern, Diesel-Oxidations-Katalysatoren (DOC) und Diesel-Rußpartikelfiltern (DPF) eingesetzt werden. Deren Aufbau ist eingangs beschrieben.

Böhmite im Sinne dieser Erfindung sind Verbindungen der allgemeinen Formel AlO(OH) x $H_2O$. Bevorzugt werden Böhmite, die über die Hydrolyse eines Aluminiumalkoxids hergestellt wurden, eingesetzt, siehe U.S.-Patent 5055019 ("Process for the Production of Boehmitic Aluminas"). Nach diesem Verfahren werden böhmitische Tonerden in einer Reinheit von mindestens 99,95% $Al_2O_3$ mit definierten Porenradien in einem Bereich zwischen 3 bis 100 nm durch salzfreie, wässrige, neutrale Aluminiumalkoholathydrolyse erhalten, wobei man die aus der Aluminiumalkoholathydrolyse erhaltene Tonerdesuspension in einem Autoklaven a) bei einem Wasserdampfdruck von 1 bis 30 bar entsprechend einer Temperatur von 100 bis 235°C, b) in einem Zeitraum von 0,5 bis 20 Stunden und c) unter Rühren mit einer Umfangsgeschwindigkeit von 1,0 bis 6,0 m/s altert.

Erfindungsgemäß werden zur Herstellung der böhmitischen Tonerden Aluminiumalkoholate eingesetzt, um hochreine Produkte zu erhalten. Die Aluminiumalkoholate können z.B. nach dem Ziegler-Verfahren hergestellt sein, bei dem vorzugsweise ein Reinigungsschritt durch Filtration durchgeführt wird. Zur Herstellung der Alumiuniumalkoholate können beispielsweise C1- bis C24-Alkohole oder deren Gemische eingesetzt werden.

Die eingesetzten Böhmite zeichnen sich u.a. durch ihre besonders hohe Reinheit aus (Gehalte von: $SiO_2$ < = etwa 0,01%, $Fe_2O_3$ < = etwa 0,01%, $Na_2O$ < = etwa 0,002%, $K_2O$ < = etwa 0,002 %, $TiO_2$ < = 0,005 %, andere Elemente < = 0,01%). Unabhängig hiervon werden in einer weiteren bevorzugten Form Böhmite eingesetzt, die ein Porenvolumen von 0,4 bis 1,2 ml/g aufweisen und/oder Kristallitgrößen von 4 bis 40 nm , vorzugsweise 4 bis 16 nm, gemessen am (120) Reflex aufweisen.

Nach einer besonders bevorzugten Ausführungsform sind die Böhmite mit organischen Verbindungen modifiziert, die zumindest eine Carboxy-Gruppe und eine oder mehrere weitere Gruppen, ausgewählt aus Hydroxy-(-OH), Carboxy (-COO bzw. -COOH) und/oder Amin- (-NH, einschließlich $-NH_2$) Gruppen, aufweist, wie z.B. Weinsäure oder Zitronensäure, insbesondere mit 2 bis 12 C-Atomen, besonders bevorzugt 4 bis 8 C-Atomen, vorzugsweise in Gewichtsanteilen von 0,1 bis 50 Gew.%, insbesondere 5 bis 15 Gew.%, bezogen auf das Trockengewicht des Böhmits. Diese verhindern das Agglomerieren und Sedimentieren der Böhmite im alkalischen Milieu. Weitere geeignete substituierte Carbonsäuren im Sinne der Erfindung sind beispielsweise 2-Hydroxypropionsäure, 2-Oxopropansäure, Hydroxybutandicarbonsäure, Dihydroxybutandicarbonsäure, 2-Hydroxypropan-1,2,3-tricarbonsäure (Citronensäure), L-Asparginsäure, L-Serin, Glycin, L-Leucin, L-Tyrosin oder L-Tryptophan.

Die erfindungsgemäß hergestellten Komposite umfassend Aluminiumoxid und Cer-/ Zirkonium-(ggf. Seltenerd)-Mischoxide weisen nach einer Ausgestaltung als Katalysatoren weiterhin Platin, Rhodium und/oder Palladium auf.

Basierend auf der vorliegenden Erfindung wurde weiterhin festgestellt, dass die Fällung in Anwesenheit einer alkalischen Suspension aus einem durch Zusatz der obigen mehrfunktionellen organischen Säuren modifizierten Böhmit, insbesondere in Kombination mit der Verwendung von Ammonium Cer(IV)-nitrat als Cer-Quelle, zu Endprodukten mit besonders hoher Thermostabilität führt. Überraschenderweise und unabhängig ist dieser Effekt besonders ausgeprägt, wenn die alkalische Suspension zu der Metallsalzlösung getropft wird.

Die Erfindung wird durch die Abbildungen näher erläutert. Es zeigen:

Fig. 1 Partikelgrößenverteilungen der Beispiele A1 und A2 in wässrigen Suspensionen
Fig. 2: Röntgenpulverdiffraktogramme des Materials aus Beispiel 2 nach Kalzinierung

Die Nachfolgenden Versuchsbeispiele zeigen, dass

a) im Vergleich zu den Herstellungsweisen in EP 1172139 B1 und WO 2012/067654 A1 höhere Restoberflächen erhalten werden,
b) auch nach Kalzinierung unter besonders scharfen Bedingungen (1150°C/36 h, 1200°C/4h) hohe Restoberflächen erhalten werden.
c) In Vergleichsbeispiel 3 werden Oberflächen erhalten, die ebenfalls sehr hoch sind und im Bereich der erfindungsgemäßen Komposite liegen, die mittels des hier beschriebenen Prozesses hergestellt wurden (Vergleichsbeispiel 3 und Beispiel 6). Der hier beschriebene Prozess kommt jedoch ohne die Verwendung von Natrium aus, was einen wesentlichen prozesstechnischen Vorteil darstellt, da Natrium zur Vergiftung von Edelmetallkatalysatoren führt.
d) In Vergleichsbeispiel 5 werden ebenfalls hohe Restoberflächen erhalten, die auch im Bereich der Komposite liegen, die mittels des hier beschriebenen Prozesses hergestellt wurden (Vergleichsbeispiel 5, Beispiele 7 und 8).

Der hier beschriebene Prozess sieht in einer Ausführungsform jedoch die Verwendung von modifiziertem Böhmit vor, was die Dispergierbarkeit in alkalischem Medium ermöglicht. Es kommt hierbei somit nicht zur Agglomeration und Sedimentation des Böhmits, sondern zu einer besonders homogenen Fällung und Verteilung der $CeO_2/ZrO_2$/(ggf. Seltenerdoxid) Komponente bei erhöhten pH-Wert in Anwesenheit von feinteilig dispergiertem Böhmit, was anhand von Partikelgrößen in der wässrigen Suspension bei hohen pH-Werten deutlich wird. Dies wird in den Beispielen A1 und A2 demonstriert.

Die Messungen der Oberflächen (BET) wurden mit Micromeritics TriStar 3000 gemäß DIN ISO 9277 durchgeführt. Die Röntgendiffraktogramme wurden mit einem Panalytical X'Pert Pro MDB Diffraktometer gemessen. Bei %-Angaben handelt es sich, wenn nicht anders angegeben, um Gewichtsprozente. Die Bestimmung der Partikelverteilung erfolgte mit einem Malvern Mastersizer 2000 mit der Hydro-S Dispergiereinheit in Wasser. Die Messung erfolgt gemäß ISO 13320:2009, wobei als Auswertung die Methode nach Fraunhofer zum Einsatz kam.

**Vergleichsbeispiel 1**

**Herstellung analog Beispiel 27 der EP 1172139 B1**

**Zusammensetzung: 61,5% $Al_2O_3$, 21% $CeO_2$, 15% $ZrO_2$, 2,5% $Y_2O_3$**

Ein Gemisch bestehend aus 96,43 g einer wässrigen Lösung aus Zirkonylnitrat ($ZrO_2$-Gehalt = 7%), 52,5g einer wässrigen Lösung aus Cer(III)-nitrat ($CeO_2$-Gehalt = 18%), 6,32 g einer wässrigen Lösung aus Yttrium-nitrat ($Y_2O_3$-Gehalt = 17,80%) und 205,61g Aluminiumnitrat-nonahydrat in kristalliner Form wurde mit 600 ml Wasser versetzt und solange gerührt, bis eine klare Lösung vorlag.

Diese Lösung wurde mit 7,47 g einer 35% $H_2O_2$ Lösung (entspricht der 1,2 fachen molaren Stoffmenge an Cer) versetzt und diese Mischung für etwa 25 Minuten gerührt. Die resultierende Lösung wurde dann durch Zugabe einer 24% igen Ammoniak-Lösung auf pH 7 gebracht und für 15 Minuten gerührt. Die so entstandene Mischung wurde abfiltriert und der Filterrückstand mit deionisiertem Wasser bei 60°C gewaschen. Dieser Filterkuchen wurde dann bei 120°C für 16 Stunden getrocknet. Im Anschluss daran wurde der getrocknete Filterkuchen bei zunächst 300°C für 5 Stunden und dann bei 700°C für 5 Stunden kalziniert.

Die gemessene Oberfläche ist in Tabelle 1 wiedergegeben.

BET nach 300°C / 5 Stunden + 700°C / 5 Stunden (Ausgangsmaterial): 168 $m^2/g$

BET nach 950°C / 5 Stunden: 109 m²/g
BET nach 1000°C / 4 Stunden: 84 m²/g
BET nach 1100°C / 2 Stunden: 32 m²/g

**Vergleichsbeispiel 2**

**Herstellung analog Beispiel 1 der EP 1172139 B1**

**Zusammensetzung: 41% Al$_2$O$_3$, 30% CeO$_2$, 23% ZrO$_2$, 2,5% Y$_2$O$_3$, 3,5% La$_2$O$_3$**

Ein Gemisch bestehend aus 145,93 g einer wässrigen Lösung aus Zirkonylnitrat (ZrO$_2$-Gehalt = 7%), 72,25 g einer wässrigen Lösung aus Cer(III)-nitrat (CeO$_2$-Gehalt = 18%),

6,07 g einer wässrigen Lösung aus Yttrium-nitrat (Y$_2$O$_3$-Gehalt = 17,80%), 10,81 g einer wässrigen Lösung aus Lanthan-nitrat (La$_2$O$_3$-Gehalt = 14,57%) und 138,08 g Aluminiumnitrat-nonahydrat in kristalliner Form wurde mit 600 ml Wasser versetzt und solange gerührt, bis eine klare Lösung vorlag.

Diese Lösung wurde mit 10,71 g einer 35% H$_2$O$_2$ Lösung (entspricht der 1,2 fachen molaren Stoffmenge an Cer) versetzt und diese Mischung für etwa 25 Minuten gerührt. Die resultierende Lösung wurde dann durch Zugabe einer 24%igen Ammoniak-Lösung auf pH 7 gebracht und für 15 Minuten gerührt. Die so entstandene Mischung wurde abfiltriert und der Filterrückstand mit deionisiertem Wasser bei 60°C gewaschen.

Dieser Filterkuchen wurde dann bei 120°C für 16 Stunden getrocknet. Im Anschluss daran wurde der getrocknete Filterkuchen zunächst bei 300°C für 5 Stunden und dann bei 700°C für 5 Stunden kalziniert.

Die gemessene Oberfläche ist in Tabelle 2 wiedergegeben.

**Vergleichsbeispiel 3**

**Herstellung analog Beispiel 6 der WO 2006/070201 A2.**

**Zusammensetzung: 51%Al$_2$O$_3$, 14,2% CeO$_2$, 34,8% ZrO$_2$**

Eine Aluminiumnitrat Lösung wurde durch Einrühren von 112,5 g Aluminiumnitrat-monohydrat in 1500 ml Wasser erzeugt. Zu dieser Lösung wurden 14,77g einer Cer(III)-nitrat Lösung (CeO$_2$-Gehalt = 28,85%) und 149,16 einer Zirkonylnitrat-Lösung (ZrO$_2$-Gehalt = 7%) gegeben. Diese Mischlösung wurde dann bei Raumtemperatur für 15 Minuten gerührt. Durch Zugabe von 25%iger Natronlauge wurde ein pH-Wert 10 eingestellt und während des Fällungsprozesses bei diesem Wert gehalten. Es wurden 5 g einer 35%igen H$_2$O$_2$ Lösung zugegeben und der pH-Wert wieder auf 10 eingestellt. Die erhaltene Suspension wurde dann für 60 Minuten gerührt. Durch Zugabe von 30%iger Salpetersäure wurde im Anschluss der pH-Wert 8 eingestellt und die Suspension erneut für 60 Minuten gerührt.

Die so entstandene Mischung wurde abfiltriert und der Filterrückstand mit deionisiertem Wasser bei 60°C gewaschen. Dieser Filterkuchen wurde dann in 850 ml deionisiertem Wasser suspendiert und durch Zugabe von 25%iger Natronlauge auf pH-Wert 10 eingestellt. Dann erfolgte die Autoklavierung bei 120°C für 6 Stunden. Die gealterte Suspension wurde auf Raumtemperatur abgekühlt, durch Zugabe von Salpetersäure auf pH-Wert 8 gebracht und für 30 Minuten gerührt.

Im Anschluss daran wurde die Suspension erneut bei 60°C für eine Stunde gerührt und danach die Flüssigkeit abfiltriert. Der erhaltene Filterkuchen wurde dann mit deionisiertem Wasser bei 60°C gewaschen und am Anschluss daran bei 850°C für 4 Stunden kalziniert. Die gemessene Oberfläche ist in Tabelle 3 wiedergegeben.

**Vergleichsbeispiel 4**

**Herstellung analog Beispiel 12 der WO 2012/067654 A1.**

**Zusammensetzung: 50% Al$_2$O$_3$, 30% CeO$_2$, 15 % ZrO$_2$, 3,5 % La$_2$O$_3$, 1,5 % Y$_2$O$_3$**

Lösung A wurde hergestellt durch Zugabe von 6,0 g einer Lösung aus Lanthan-nitrat (La$_2$O$_3$-Gehalt 14,57%) zu 53g einer 24%iger Ammoniaklösung und 110 g destilliertem Wasser.

Lösung B wurde hergestellt durch Zusammenbringen von 22,19 g Zirconylnitrat (ZrO$_2$-Gehalt = 33,80%), 35,89 g Cer(III)-nitrat (CeO$_2$-Gehalt = 41,80%), 4,21 g einer Lösung aus Yttrium-nitrat (Y$_2$O$_3$-Gehalt = 4,21%), 100 g destilliertem Wasser und Wasserstoffperoxid, wobei das molare Verhältnis H$_2$O$_2$/CeO$_2$ bei 3 lag.

Lösung C wurde hergestellt durch Auflösen von 46,3 g Natrium-aluminat in 200 g destilliertem Wasser.

2 l destilliertes Wasser wurden vorgelegt und auf 65°C erwärmt. Innerhalb von 25 Minuten wurde Lösung A zugetropft und zeitgleich wurde durch Zugabe von Lösung C der pH-Wert bei 7,3 gehalten. Nach vollständiger Zugabe von Lösung A wurde der Rest von Lösung C vollständig zugegeben und so der pH-Wert von 9,8 eingestellt. Anschließend wurde die erhaltene Suspension mit verdünnter Salpetersäure auf pH-Wert 4 eingestellt. Im Anschluss erfolgte die Zugabe von Lösung B binnen 20 Minuten. Währenddessen wurde der pH-Wert durch Zugabe von 10%iger Ammoniaklösung bei 4 gehalten. Nach vollständiger Zugabe von Lösung B wurde der pH-Wert durch Zugabe von konzentrierter Ammoniaklösung auf 8,2 angehoben. Die Suspension wurde filtriert und der Feststoff mit 2 Litern einer auf 60°C erwärmten wässrigen Lösung von Ammoniumhydrogencarbonat (120g/ 1 $H_2O$) gewaschen. Die erhaltenen Oberflächen sind in Tabelle 4 angegeben.

**Vergleichsbeispiel 5**

**Herstellung analog Vergleichsbeispiel 3 der US 6,831,036 bzw. Beispiel 7 der WO 2006/119549 A1.**

**Zusammensetzung: 50% $Al_2O_3$, 30% $CeO_2$, 15 % $ZrO_2$, 3,5 % $La_2O_3$, 1,5 % $Y_2O_3$**

15g $CeO_2$, 7,5 g $ZrO_2$, 1,75 g $La_2O_3$ und 0,75 g $Y_2O_3$ wurden in Form ihrer Nitrate in Wasser gelöst. 31,53 g DISPERAL HP 14 (Böhmit, $Al_2O_3$-Gehalt = 79,3 %) wurde dieser sauren Lösung zugegeben und die erhaltene Suspension für 30 Minuten gerührt. 300 g konzentrierte Ammoniaklösung wurden mit 750 ml Wasser verdünnt und bei Raumtemperatur vorgelegt. Die saure Böhmit/Metallnitrat-Suspension wurde langsam der Ammoniaklösung zugetropft und nach beendeter Zugabe wurde 30 Minuten nachgerührt. Durch Filtrieren wurde der Feststoff abgetrennt, mit 1,5 1 Wasser gewaschen und im Anschluss für 16 Stunden bei 100°C getrocknet.
Die erhaltenen Oberflächen sind in Tabelle 4 angegeben.

**Beispiel A1 - Herstellen einer alkalischer Böhmitsuspension bei Verwendung eines reinen Böhmits.**

Eine Suspension mit einem $Al_2O_3$-Gehalt von 5% wurde durch Einrühren von DISPERAL HP14 (Böhmit) in deionisiertes Wasser bei pH 7 hergestellt. Anschließend wurde der pH-Wert durch Zugabe einer 24%igen Ammoniak-Lösung auf 10 hergestellt. Die Partikelgrößen in der Suspension wurden mittels Laserbeugung (Mastersizer) bestimmt:

$$D_{10} = 0,96 \ \mu m; \ D_{50} = 5,11 \ \mu m; \ D_{90} = 28,34 \ \mu m$$

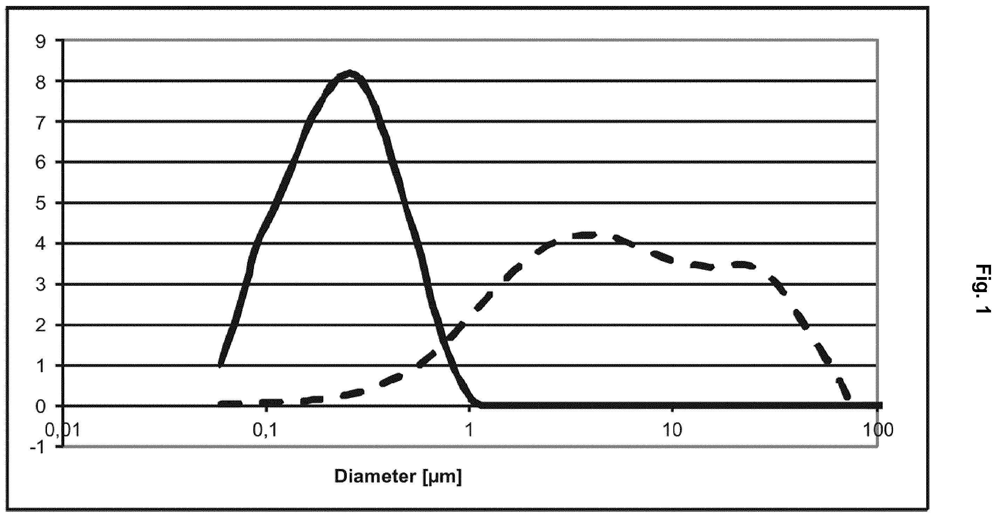

Die gemessenen Partikelgrößenverteilungen sind in Fig. 1 gezeigt.

**Beispiel A2 - Herstellen einer alkalischer Böhmitsuspension bei Verwendung eines modifizierten Böhmits.**

Eine Suspension mit einem $Al_2O_3$-Gehalt von 5% wurde durch Einrühren von DISPERAL HP14/7 (Böhmit mit Zitronensäure modifiziert) in deionisiertes Wasser bei pH 7 hergestellt. Anschließend wurde der pH-Wert durch Zugabe einer 24%igen Ammoniak-Lösung auf 10 hergestellt. Die Partikelgrößen in der Suspension wurden mittels Laserbeugung (Mastersizer) bestimmt:

$$D_{10} = 0,09 \ \mu m; \ D_{50} = 0,23 \ \mu m; \ D_{90} = 0,67 \ \mu m$$

Die gemessenen Partikelgrößenverteilungen sind in Abb. 1 gezeigt.

**Beispiel 1 (nicht-erfindungsgemäß)**

**Zusammensetzung: 61,5% $Al_2O_3$, 21% $CeO_2$, 15% $ZrO_2$, 2,5% $Y_2O_3$ (entsprechend Vergleichsbeispiel 1)**

Eine Metallsalzlösung bestehend aus 81,4 g einer Lösung von Ammonium Cer(IV)-nitrat ($CeO_2$-Gehalt = 12,90%), 103,30 g einer Lösung Zirconylnitrat ($ZrO_2$-Gehalt = 7,26 %) und 7,0 g einer Lösung aus Yttrium-nitrat ($Y_2O_3$-Gehalt = 17,80%) wurde vorgelegt und auf 90°C erwärmt.
Eine Suspension bestehend aus 615,0 g DISPERAL HP14/7 (Böhmit mit Zitronensäure modifiziert) ($Al_2O_3$-Ge-halt = 5%) wurde durch Einrühren des Feststoffes in deionisiertes Wasser und anschließender Zugabe von 24%igen Ammoniak-Lösung bis pH-Wert 10 hergestellt. Diese Suspension wurde langsam der Metallsalzlösung zugetropft und nach Beendigung der Zugabe der pH-Wert durch Zugabe von 24%igen Ammoniak-Lösung auf 8,7 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

**Beispiel 2 (nicht-erfindungsgemäß)**

**Zusammensetzung: 41% $Al_2O_3$, 30% $CeO_2$, 23% $ZrO_2$, 2,5% $Y_2O_3$, 3,5% $La_2O_3$ (entsprechend Vergleichsbeispiel 2)**

Eine Metallsalzlösung bestehend aus 96,9 g einer Lösung von Ammonium Cer(IV)-nitrat ($CeO_2$-Gehalt = 12,90%), 131,96 g einer Lösung Zirconylnitrat ($ZrO_2$-Gehalt = 7,26 %), 10,02 g einer Lösung aus Lanthan-nitrat ($La_2O_3$-Gehalt = 14,57%) und 5,84 g einer Lösung aus Yttrium-nitrat ($Y_2O_3$-Gehalt = 17,80%) wurde vorgelegt und auf 90°C erwärmt.

Eine Suspension bestehend aus 341,6 g DISPERAL HP14/7 (Böhmit mit Zitronensäure modifiziert) ($Al_2O_3$-Gehalt = 5%) wurde durch Einrühren des Feststoffes in deionisiertes Wasser und anschließender Zugabe von einer 24%igen Ammoniak-Lösung bis pH-Wert 10 hergestellt.

**Tabelle 1**

| Gemessene BET-Oberflächen aus Vergleichsbeispiel 1 und Beispiel 1 nach Kalzinierung [$m^2/g$]. | | |
|---|---|---|
| | Vergleichsbeispiel 1 (analog EP 1 172 139) | Beispiel 1 (erfindungsgemäß) |
| 5 h / 300°C + 5 h / 700°C (Ausgangsmaterial) | 168 | 126 |
| 5 h / 950 °C | 109 | 95 |
| 4 h/ 1000 °C | 84 | 89 |
| 2 h / 1100°C | 32 | 70 |

Diese Suspension wurde langsam der Metallsalzlösung zugetropft und nach Beendigung der Zugabe der pH-Wert durch Zugabe von 24%igen Ammoniak-Lösung auf 8,5 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

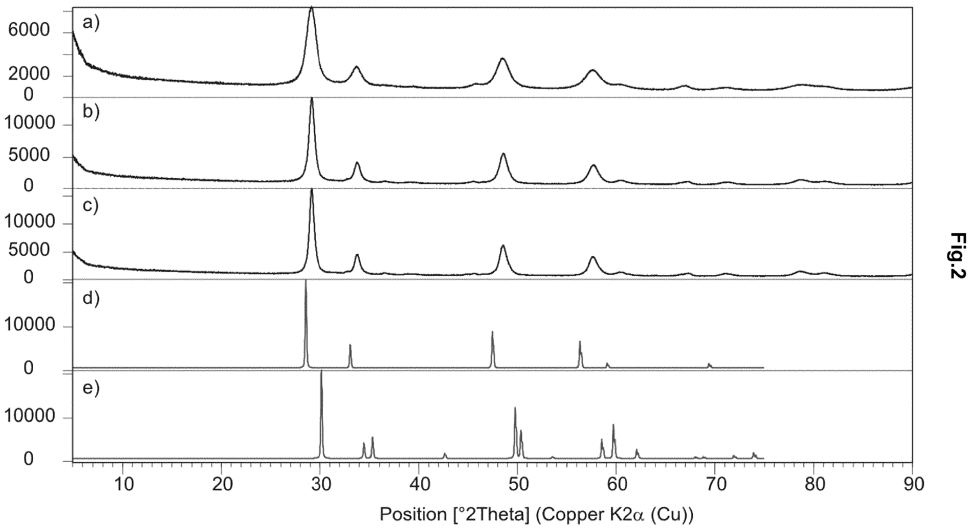

In Fig. 2 sind die Röntgenpulverdiffraktogramme des Materials aus Beispiel 2 nach Kalzinierung gezeigt.

    a) nach Kalzinierung 4h/850°C
    b) nach Kalzinierung 4h/850°C + 4h 1100°C
    c) nach Kalzinierung 4h/850°C + 24h 1100°C
    d) Simuliertes Diffraktogramm von $CeO_2$ (kubisch)
    e) Simuliertes Diffraktogramm von $ZrO_2$ (tetragonal).

**Beispiel 3 (erfindungsgemäß)**

**Die Zusammensetzung entspricht exakt derjenigen aus Vergleichsbeispiel 2 41% $Al_2O_3$, 30% $CeO_2$, 23% $ZrO_2$, 2,5% $Y_2O_3$, 3,5% $La_2O_3$**

220,4 g einer Suspension von PURAL SB (Böhmit, $Al_2O_3$-Gehalt = 9,3%) (pH-Wert 9,5) wurden mit einer 24% igen Ammoniak-Lösung auf pH 9,5 gebracht und vorgelegt. Bei Raumtemperatur erfolgte die lansame Zugabe einer Mischung bestehend aus 300 g einer Lösung aus Cer-acetat ($CeO_2$-Gehalt = 5,0%), 50,3 g einer Lösung aus Zirkonium-acetat ($ZrO_2$-Gehalt = 22,88%), 24,0 g einer Lösung aus Lanthan-acetat ($La_2O_3$-Gehalt = 7,3 %) und 31,3 g einer Lösung aus Yttrium-acetat ($Y_2O_3$-Gehalt = 4,0%). Der pH-Wert wurde dabei konstant bei pH-Wert 9,5 durch zeitgliche Zugabe einer 24%igen Ammoniak-Lösung gehalten. Die erhaltene Mischung wurde für 45 Minuten nachgerührt. Im Anschluss daran wurde die Suspension für 3 Stunden bei 140°C autoklaviert. Die erhaltene Mischung wird abfiltriert und der Feststoff mit deionisiertem Wasser bei 60°C gewaschen. Dieser Filterkuchen wurde für 16 Stunden im Trockenschrank getrocknet und dann bei 850°C kalziniert.

**Beispiel 4 (nicht-erfindungsgemäß)**

**Zusammensetzung: 41% Al$_2$O$_3$, 30% CeO$_2$, 23% ZrO$_2$, 2,5% Y$_2$O$_3$, 3,5% La$_2$O$_3$ (entspricht Vergleichsbeispiel 2)**

Eine Böhmit-Suspension bestehend aus 492,0 g DISPERAL HP14/7 (Böhmit mit Zitronensäure modifiziert) (Al$_2$O$_3$-Gehalt = 5%) wurde durch Einrühren des Feststoffes in deioniesiertes Wasser und anschließender Zugabe von einer 24%igen Ammoniak-Lösung bis pH-Wert 10 hergestellt.

Bei 90°C wurde zu dieser Suspension langsam eine Metallsalzlösung bestehend aus 139,53 g einer Lösung von Ammonium Cer(IV)-nitrat (CeO$_2$-Gehalt = 12,90%), 190,1 g einer Lösung aus Zirconylnitrat (ZrO$_2$-Gehalt = 7,26 %), 14,41 g einer Lösung aus Lanthan-nitrat (La$_2$O$_3$-Gehalt = 14,57%) und 5,45 g einer Lösung aus Yttriumnitrat (Y$_2$O$_3$-Gehalt = 27,54 %) zugetropft. Der pH-Wert wurde dabei konstant bei 9,0 durch zeitgleiche Zugabe einer 24%igen Ammoniak-Lösung gehalten. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

**Beispiel 5**

**Zusammensetzung: 41% Al$_2$O$_3$, 30% CeO$_2$, 23% ZrO$_2$, 2,5% Y$_2$O$_3$, 3,5% La$_2$O$_3$ entspricht Vergleichsbeispiel 2, jedoch unter Verwendung von Cer(III)-nitrat + H$_2$O$_2$**

Eine Metallsalzlösung bestehend aus 58,34 g einer Lösung von Cer(III)-nitrat (CeO$_2$-Gehalt = 18,00%), 131,96 g einer Lösung Zirconylnitrat (ZrO$_2$-Gehalt = 7,26 %), 10,02 g einer Lösung aus Lanthan-nitrat (La$_2$O$_3$-Gehalt = 14,57%) und 5,84 g einer Lösung aus Yttrium-nitrat (Y$_2$O$_3$-Gehalt = 17,80%) wurde vorgelegt.

Bei Raumtemperatur werden 25,74 g einer 30%igen H$_2$O$_2$-Lösung, die auf 5°C gekühlt ist, zugegeben. Die erhaltene Suspension wird für 10 Minuten gerührt und dann anschließend auf 90°C erwärmt. Eine Suspension bestehend aus 341,6 g DISPERAL HP14/7 (Böhmit mit Zitronensäure modifiziert) (Al$_2$O$_3$-Gehalt = 5%) wurde durch Einrühren des Feststoffes in deionisiertes Wasser und anschließender Zugabe von einer 24%igen Ammoniak-Lösung bis pH-Wert 10 hergestellt.

Diese Suspension wurde langsam der Metallsalzlösung zugetropft und nach Beendigung der Zugabe der pH-Wert durch Zugabe von 24%igen Ammoniak-Lösung auf 8,3 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

**Tabelle 2.**

| Gemessene Oberflächen (BET) aus Beispielen 2-6 und Vergleichsbeispiel 2 nach Kalzinierung in m$^2$/g. | | | | | |
|---|---|---|---|---|---|
| | Vgl. 2, analog EP 1 172 139 | Bsp.2 | Bsp.3 | Bsp.4 | Bsp.5 |
| | | erfindungsgemäß | | | |
| 4 h / 850°C (Ausgangsmat.) | 112 | 98 | 89 | 88 | 85 |
| 4 h/ 1100 °C | 18 | 49 | 34 | 46 | 51 |
| 24 h / 1100°C | 12 | 45 | 34 | 39 | 37 |
| 36 h /1150 °C | | 20 | | | 25 |
| 4 h / 1200°C | | 16 | | | 21 |

**Beispiel 6 (nicht-erfindungsgemäß)**

**Zusammensetzung: 51% Al$_2$O$_3$, 14,2% CeO$_2$, 34,8% ZrO$_2$ (entspricht Vergleichsbeispiel 3)**

Eine Metallsalzlösung bestehend aus 55,0 g einer Lösung von Ammonium Cer(IV)-nitrat (CeO$_2$-Gehalt = 12,90%) und 239,7 g einer Lösung Zirconylnitrat (ZrO$_2$-Gehalt = 7,26 %) wurde vorgelegt und auf 90°C erwärmt.

Eine Suspension bestehend aus 510,0 g DISPERAL HP14/7 (Böhmit mit Zitronensäure modifiziert) (Al$_2$O$_3$-Gehalt = 5%) wurde durch Einrühren des Feststoffes in deionisiertes Wasser und anschließender Zugabe von einer 24%igen Ammoniak-Lösung bis pH-Wert 10 hergestellt.

Diese Suspension wurde langsam der Metallsalzlösung zugetropft und nach Beendigung der Zugabe der pH-Wert durch Zugabe von 24%igen Ammoniak-Lösung auf 8,7 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

In Klammern sind die Werte aus Vergleichsbeispiel 3 angegeben.

BET nach 850°C / 4 Stunden (Ausgangsmaterial): 97 m$^2$/g (107)
BET nach 1100°C / 2 Stunden: 62 m$^2$/g (47)
BET nach 1100°C/ 24 Stunden: 36 m$^2$/g (35)

**Tabelle 3.**

| Gemessene Oberflächen (BET) aus Vergleichsbeispiel 3 und Beispiel 7 nach Kalzinierung [m$^2$/g]. | | |
|---|---|---|
| | Vergleichsbeispiel 3 (analog WO 2006/070201) | Beispiel 6 (erfindungsgemäß) |
| 850°C / 4 Stunden (Ausgangsmaterial) | 107 | 97 |
| 2 h / 1100 °C | 47 | 62 |
| 24 h / 1100°C | 35 | 36 |

**Beispiel 7 (nicht-erfindungsgemäß)**

**Zusammensetzung: 50% Al$_2$O$_3$, 30% CeO$_2$, 15 % ZrO$_2$, 3,5 % La$_2$O$_3$, 1,5 % Y$_2$O$_3$ (entspricht Vergleichsbeispielen 4 und 5)**

Eine Metallsalzlösung bestehend aus 116,3 g einer Lösung von Ammonium Cer(IV)-nitrat (CeO$_2$-Gehalt = 12,90%), 103,3 g einer Lösung Zirconylnitrat (ZrO$_2$-Gehalt = 7,26 %), 12,1 g einer Lösung aus Lanthan-nitrat (La$_2$O$_3$-Gehalt = 14,50%) und 4,2 g einer Lösung aus Yttrium-nitrat (Y$_2$O$_3$-Gehalt = 17,80 %) wurde vorgelegt und auf 90°C erwärmt.
Eine Suspension bestehend aus 500g DISPERAL HP14/7 (Böhmit mit Zitronensäure modifiziert) (Al$_2$O$_3$-Gehalt = 5%) wurde durch Einrühren des Feststoffes in deionisiertes Wasser und anschließender Zugabe von einer 24%igen Ammoniak-Lösung bis pH-Wert 10 hergestellt.
Diese Suspension wurde langsam der Metallsalzlösung zugetropft und nach Beendigung der Zugabe der pH-Wert durch Zugabe von 24%igen Ammoniak-Lösung auf 8,3 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde bei 120°C für 16 Stunden getrocknet und anschließend bei 850°C für 4 Stunden kalziniert.

**Beispiel 8 (nicht-erfindungsgemäß)**

**Zusammensetzung: 50% Al$_2$O$_3$, 30% CeO$_2$, 15 % ZrO$_2$, 3,5 % La$_2$O$_3$, 1,5 % Y$_2$O$_3$ (entspricht Vergleichsbeispielen 4 und 5)**

Eine Metallsalzlösung bestehend aus 116,3 g einer Lösung von Ammonium Cer(IV)-nitrat (CeO$_2$-Gehalt = 12,90%), 103,3 g einer Lösung Zirconylnitrat (ZrO$_2$-Gehalt = 7,26 %), 12,1 g einer Lösung aus Lanthan-nitrat (La$_2$O$_3$-Gehalt = 14,50%) und 4,2 g einer Lösung aus Yttrium-nitrat (Y$_2$O$_3$-Gehalt = 17,80 %) wurde vorgelegt und auf 90°C erwärmt.
Eine Suspension bestehend aus 500 g DISPERAL HP14/7 (Böhmit mit Zitronensäure modifiziert) (Al$_2$O$_3$-Gehalt = 5%) wurde durch Einrühren des Feststoffes in deioniesiertes Wasser und anschließender Zugabe von einer 24%igen Ammoniak-Lösung bis pH-Wert 10 hergestellt. Diese Suspension wurde langsam der Metallsalzlösung zugetropft und nach Beendigung der Zugabe der pH-Wert durch Zugabe von 24%igen Ammoniak-Lösung auf 9,0 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

**Beispiel 9 (nicht-erfindungsgemäß)**

## EP 3 505 241 B1

**Zusammensetzung: 70% Al$_2$O$_3$, 20% CeO$_2$, 7% ZrO$_2$, 3,0% La$_2$O$_3$**

Eine Böhmit-Suspension bestehend aus 420,0 g DISPERAL HP14/7 (Böhmit mit Zitronensäure modifiziert) (Al$_2$O$_3$-Gehalt = 5%) wurde durch Einrühren des Feststoffes in deioniesiertes Wasser und anschließender Zugabe von einer 24%igen Ammoniak-Lösung bis pH-Wert 10 hergestellt. Bei 90°C wurde zu dieser Suspension langsam eine Metallsalzlösung bestehend aus 46,51 g einer Lösung von Ammonium Cer(IV)-nitrat (CeO$_2$-Gehalt = 12,9 %), 30,0 g einer Lösung aus Zirconylnitrat (ZrO$_2$-Gehalt = 7,0%) und 6,18 g einer Lsg. aus Lanthan-nitrat (La$_2$O$_3$-Gehalt = 14,57%) zugetropft. Der pH-Wert wurde dabei konstant bei 9,0 durch zeitgleiche Zugabe einer 24%igen Ammoniak-Lösung gehalten. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann bei 120°C für 16 Stunden getrocknet. Das getrocknete Material wurde im Anschluss bei 850°C kalziniert.

**Tabelle 4.**

| Gemessene Oberflächen (BET) aus Vergleichsbeispielen 4 und 5 sowie Beispielen 8-10 in m$^2$/g. | | | | | | |
|---|---|---|---|---|---|---|
| | Vgl.4 | berechnet* | Vg1.5 | Bsp.7 | Bsp.8 | Bsp.9 |
| 4 h / 850°C (Ausgangsmaterial) | 130 | | 96 | 92 | 96 | 101 |
| 4 h / 1200°C | 17 | 22 (5 h) | 23 | 23 | 25 | 40 |
| Oberflächen berechnet anhand der Formeln in WO2012/067654 A1 | | | | | | |

## Patentansprüche

1.  Verfahren zur Herstellung von Kompositen umfassend Aluminiumoxid und Cer-/ Zirkonium-(ggf. Seltenerd)-Mischoxide umfassend folgende Schritte:

    (a) Bereitstellen einer Suspension umfassend Böhmit als Alumina-Precursor und Einstellen des pH-Wertes auf 8 bis 11,5;
    (b) Herstellung einer wässrigen Metallsalzlösung, die Metallsalze von Cer und von Zirkonium umfasst;
    (c) Zusammenbringen der Suspension aus (a) mit der Metallsalzlösung aus (b) bei Temperaturen von 5 bis 95°C oder Aussetzen der so erhalten Aufschlämmung diesen Temperaturen, wobei die Suspension aus (c) in wässriger Umgebung bei zumindest 90°C für zumindest 1 h hydrothermal gealtert wird;
    (d) Isolieren des Feststoffes aus (c); und
    (e) Kalzinieren des Feststoffes aus (d).

2.  Verfahren gemäß Anspruch 1, wobei das Isolieren (d) das Abtrennen der wässrigen Lösung, das Waschen des Feststoffes aus (c) mit Wasser und das Trocknen des Feststoffes umfasst.

3.  Verfahren gemäß Anspruch 1 oder 2, wobei das Isolieren (d) die Trocknung und das (Re-) Dispergieren des Feststoffes aus (c) und die anschließende Sprühtrocknung umfasst.

4.  Verfahren gemäß zumindest einem der vorhergehenden Ansprüche, wobei das Komposit weiterhin eine oder mehrere Erdalkalielemente/-Verbindungen, Seltenerdelemente/- Verbindungen, Zirkonium und/oder Silicium, insbesondere Seltenerd-Elemente/-Verbindungen umfasst, wobei diese vor der Trocknung, und insbesondere erst nach Schritt (c) oder sogar (d) in Form einer oder mehrerer weiterer löslicher Verbindungen zugegeben werden.

5.  Verfahren gemäß zumindest einem der vorhergehenden Ansprüche, wobei das Zusammenbringen umfasst:

    (c1) Vorlage der Metallsalzlösung und Zutropfen der Alumina-Precursor Suspension und anschließendes Einstellen des pH-Wertes auf 6,5 bis 11, insbesondere 8 bis 10,5 , besonders bevorzugt 8,5 bis 10;
    (c2) Vorlage der Metallsalzlösung und Zutropfen der Alumina-Precursor Suspension und zeitgleich Einstellen des pH-Wertes auf 6,5 bis 11, insbesondere 8 bis 10,5, besonders bevorzugt 8,5 bis 10 oder
    (c3) Vorlage der Alumina-Precursor Suspension und gleichzeitiges Zutropfen der Metallsalzlösung und der Ammoniaklösung zur Einhaltung eines pH-Wertes von 6,5 bis 11, insbesondere 8 bis 10,5, besonders bevorzugt 8,5 bis 10.

6. Verfahren gemäß zumindest einem der vorhergehenden Ansprüche, wobei

die Suspension aus (c) in wässriger Umgebung hydrothermal gealtert wird bei zumindest 120°C und für zumindest 4h, und/oder

die Suspension aus (c) nach dem hydrothermalen Altern filtriert wird und vorzugsweise der Feststoff sodann mit deionisiertem Wasser gewaschen wird.

7. Verfahren gemäß zumindest einem der vorhergehenden Ansprüche, wobei zur Herstellung der Metallsalzlösung in Wasser lösliche Salze der Metalle verwendet werden, insbesondere z.B. Acetate, Nitrate und/oder Chloride.

8. Verfahren gemäß zumindest einem der vorhergehenden Ansprüche, wobei das Ce/Zr (ggf. Seltenerd)-Oxid in Form einer "solid solution" (festen Lösung) im Komposit vorliegt und $Al_2O_3$ und die Ce-Zr-(ggf. Seltenerd)-Mischoxide homogen verteilt nebeneinander vorliegen.

9. Verfahren gemäß zumindest einem der vorhergehenden Ansprüche, wobei auf die Zugabe von Alkali- und/oder Erdalkalisalzen verzichtet wird, ausgenommen ggf. Bariumsalze.

10. Verfahren gemäß zumindest einem der vorhergehenden Ansprüche, wobei die Böhmite mit organischen Verbindungen versehen sind, die zumindest eine Carboxy-Gruppe (-COO bzw. -COOH) und eine oder mehrere weitere Gruppen ausgewählt aus Hydroxy-(-OH), Oxo- (O), Carboxy (-COO bzw. -COOH) und/oder Amin- (-NH bzw. $-NH_2$) Gruppen aufweist, insbesondere mit 2 bis 12 C-Atomen, besonders bevorzugt 4 bis 8 C-Atomen, vorzugsweise in Gewichtsanteilen von 0,1 bis 50 Gew.%, insbesondere 5 bis 15 Gew.%, bezogen auf das Trockengewicht des Böhmits.

11. Verfahren gemäß zumindest einem der vorhergehenden Ansprüche, wobei die Suspension umfassend Böhmit durch eine Stickstoffbase auf den pH-Wert eingestellt ist, insbesondere Ammoniak, Harnstoff und/oder Urotropin.

12. Verfahren gemäß zumindest einem der vorhergehenden Ansprüche, wobei die Mischoxid-/Kompositzusammensetzung 20 bis 80 Gew.% Aluminium, 5 bis 80 Gew.% Zirkonium, 5 bis 80 Gew.% Cer und ggf. 0 bis 12 Gew.% Seltenerdmetall(e) (RE) aufweist, berechnet als $Al_2O_3$, $ZrO_2$, $CeO_2$, $RE_2O_3$ .

13. Verfahren gemäß zumindest einem der vorhergehenden Ansprüche, wobei die Böhmite bzw. die Böhmit-Suspension durch Hydrolyse eines Aluminiumalkoxids hergestellt werden, vorzugsweise unter Abtrennung des Alkohols.

14. Al/Ce/Zr-Oxidkomposit umfassend Aluminiumoxid und ein Cer-/ Zirkonium-(ggf. Seltenerd)-Mischoxid in Form einer "solid solution" (festen Lösung), nachweisbar durch Röntgenpulverbeugung, wobei

a) $Al_2O_3$ und die Ce-Zr-(ggf. Seltenerd)-Mischoxide homogen verteilt nebeneinander vorliegen, und
b) das Al/Ce/Zr-Oxidkomposit nach zumindest einem der Ansprüche 1 bis 13 herstellbar ist.

15. Al/Ce/Zr-Oxidkomposit gemäß Anspruch 14 enthaltend

• 20 bis 80 Gew.%, vorzugsweise 40 bis 70 Gew.%, Aluminium berechnet als $Al_2O_3$,
• 5 bis 80 Gew.%, vorzugsweise 5 bis 40 Gew.%, Zirkonium berechnet als $ZrO_2$,
• 5 bis 80 Gew.%, vorzugsweise 5 bis 40 Gew.% Cer berechnet als $CeO_2$, und
• 0 bis 12 Gew.%, vorzugsweise 0,1 bis 9 Gew.% Seltenerdmetall(e) (RE) berechnet als $RE_2O_3$.

16. Al/Ce/Zr-Oxidkomposit gemäß Anspruch 14 oder 15 aufweisend auch nach 4 h bei 1200°C noch Oberflächen von zumindest 20 $m^2/g$, vorzugsweise zumindest 40 $m^2/g$, gemessen nach BET.

17. Al/Ce/Zr-Oxidkomposit gemäß zumindest einem der Anspruch 14 bis 16, wobei das Al/Ce/Zr-Oxidkomposit ein Al/Ce/Zr/Seltenerd Oxidkomposit ist und als Seltenerdoxide Oxide des Neodyms, Praseodyms, Yttriums und/oder Lanthans umfasst.

18. Al/Ce/Zr-Oxidkomposit gemäß zumindest einem der Anspruch 14 bis 17 aufweisend weiterhin Platin, Rhodium und/oder Palladium.

**EP 3 505 241 B1**

**Claims**

1. A method for producing composites comprising aluminum oxide and cerium/zirconium (optionally rare earth) mixed oxides comprising the following steps:

   (a) providing a suspension comprising boehmite as the alumina precursor and adjusting the pH to 8 to 11.5;
   (b) producing an aqueous metal salt solution comprising metal salts of cerium and of zirconium;
   (c) bringing in contact the suspension of (a) with the metal salt solution from (b) at temperatures of 5 to 95°C or exposing the resulting slurry to these temperatures, wherein the suspension from (c) is hydrothermally aged in an aqueous environment at a temperature of at least 90°C and for at least one hour;
   (d) isolating the solids from (c) and
   (e) calcining the solids from (d).

2. The method according to claim 1, wherein the isolation (d) comprises separation of the aqueous solution, washing of the solids from (c) with water and drying the solids.

3. The method according to claim 1 or 2, wherein the isolation (d) comprises the drying and (re-)dispersing of the solids from (c) and the subsequent spray drying.

4. The method according to at least one of the preceding claims, wherein the composite further comprises one or more alkaline earth elements/compounds, rare earth elements/compounds, zirconium and/or silicon, in particular rare earth elements/compounds, wherein these are added before drying and in particular only after step (c) or even (d) in the form of one or more further soluble compounds.

5. The method according to at least one of the preceding claims, wherein bringing in contact comprises:

   (c1) providing the metal salt solution and dropwise addition of the alumina precursor suspension and then adjustment of the pH to 6.5 to 11, in particular 8 to 10.5, especially preferably 8.5 to 10;
   (c2) providing the metal salt solution and dropwise addition of the alumina precursor suspension and at the same time adjusting the pH to 6.5 to 11, in particular 8 to 10.5, especially preferably 8.5 to 10 or
   (c3) providing the alumina precursor suspension and at the same time dropwise addition of the metal salt solution and of the ammonia solution to maintain a pH of 6.5 to 11, in particular 8 to 10.5, especially preferably 8.5 to 10.

6. The method according to at least one of the preceding claims, wherein the suspension of (c) is hydrothermally aged in an aqueous environment at at least 120°C and for at least four hours and/or
   the suspension from (c) is filtered after being hydrothermally aged and preferably the solid matter is washed using deionised water.

7. The method according to at least one of the preceding claims, wherein water-soluble salts of the metals are used to prepare the metal salt solution, in particular for example acetates, nitrates and/or chlorides.

8. The method according to at least one of the preceding claims, wherein Ce/Zr (optionally rare earth) oxide is present in the form of a solid solution in the composite, and $Al_2O_3$ and the Ce/Zr (optionally rare earth) mixed oxides are present homogeneously distributed side by side.

9. The method according to at least one of the preceding claims, wherein the addition of alkali and/or alkaline earth salts is omitted, except for optionally barium salts.

10. The method according to at least one of the preceding claims, wherein the boehmites are provided with organic compounds having at least one carboxyl group (-COO and/or -COOH) and one or more other groups selected from hydroxy(-OH), oxo(-O), carboxy(-COO and/or -COOH) and/or amine(-NH and/or -$NH_2$) groups, in particular with 2 to 12 carbon atoms, especially preferably 4 to 8 carbon atoms, preferably in amount by weight of 0.1% to 50% by weight, in particular 5% to 15% by weight based on the dry weight of the boehmite.

11. The method according to at least one of the preceding claims, wherein the suspension comprising boehmite is adjusted to the pH by a nitrogen base, in particular ammonia, urea and/or urotropin.

12. The method according to at least one of the preceding claims, wherein the mixed oxide/composite composition comprises 20% to 80% by weight aluminum, 5% to 80% by weight zirconium, 5% to 80% by weight cerium and optionally 0% to 12% by weight rare earth metal(s) (RE), calculated as $Al_2O_3$, $ZrO_2$, $CeO_2$, $RE_2O_3$.

13. The method according to at least one of the preceding claims, wherein the boehmite and/or the boehmite suspension are prepared by hydrolysis of an aluminum alkoxide, preferably with separation of the alcohol.

14. An Al/Ce/Zr oxide composite comprising aluminum oxide and cerium/zirconium mixed (optionally rare earth) oxide in the form of a "solid solution", verifiable by x-ray powder diffraction, wherein

   a) $Al_2O_3$ and the Ce/Zr (optionally rare earth) mixed oxides are present homogeneously distributed side by side, and
   b) the Al/Ce/Zr oxide composite is obtainable according to at least one of the claims 1 to 13.

15. The Al/Ce/Zr oxide composite according to claim 14 comprising

   • 20% to 80% by weight, preferably 40% to 70% by weight, aluminum, calculated as $Al_2O_3$;
   • 5% to 80% by weight, preferably 5% to 40% by weight, zirconium, calculated as $ZrO_2$;
   • 5% to 80% by weight, preferably 5% to 40% by weight, cerium, calculated as $CeO_2$; and
   • 0% to 12% by weight, preferably 0,1% to 9% by weight, rare earth metal(s) (RE) calculated as $RE_2O_3$.

16. The Al/Ce/Zr oxide composite according to claims 14 and 15 having after 4h at 1200°C surface areas of at least 20 $m^2/g$, preferably 40 $m^2/g$, measured according to BET.

17. The Al/Ce/Zr oxide composite according to at least one of claims 14 to 16, wherein the Al/Ce/Zr oxide composite is an Al/Ce/Zr rare earth oxide composite comprising as rare earth oxides the oxides of neodymium, praseodymium, yttrium and/or lanthanum.

18. The Al/Ce/Zr oxide composite according to at least one of claims 14 to 17 further comprising platinum, rhodium and/or palladium.


**Revendications**

1. - Procédé de fabrication de composites comportant de l'oxyde d'aluminium et des oxydes mixtes de cérium/zirconium-(le cas échéant de terres rares), comportant les étapes suivantes :

   a) fourniture d'une suspension comportant de la boehmite comme précurseur d'alumine et ajustement de la valeur de pH à 8 à 11,5 ;
   b) préparation d'une solution aqueuse de sels métalliques, qui comporte des sels métalliques de cérium et de zirconium ;
   c) réunion de la suspension provenant de (a) avec la solution de sels métalliques provenant de (b) à des températures de 5 à 95°C ou exposition de la bouillie ainsi obtenue à ces températures, la suspension provenant de (c) étant soumise à un vieillissement hydrothermal dans un environnement aqueux à au moins 90°C pendant au moins 1 heure ;
   d) isolement de la matière solide provenant de (c) ; et
   e) calcination de la matière solide provenant de (d).

2. - Procédé selon la revendication 1, dans lequel l'isolement (d) comporte la séparation de la solution aqueuse, le lavage de la matière solide provenant de (c) avec de l'eau et le séchage de la matière solide.

3. - Procédé selon l'une des revendications 1 ou 2, dans lequel l'isolement (d) comporte le séchage et la (re-)dispersion de la matière solide provenant de (c) et le séchage par pulvérisation consécutif.

4. - Procédé selon au moins l'une des revendications précédentes, dans lequel le composite comporte en outre un ou plusieurs éléments/composés alcalino-terreux, éléments/composés de terres rares, du zirconium et/ou silicium, en particulier des éléments/composés de terres rares, ceux-ci étant ajoutés avant le séchage, et en particulier seulement après l'étape (c) voire même (d), sous la forme d'un ou de plusieurs autres composés solubles.

**5.** - Procédé selon au moins l'une des revendications précédentes, dans lequel la réunion comporte

c1) la présentation de la solution de sels métalliques et l'addition goutte à goutte de la suspension de précurseur d'alumine et l'ajustement consécutif de la valeur de pH à 6,5 à 11, en particulier à 8 à 10,5, de manière particulièrement préférée à 8,5 à 10 ;
c2) la présentation de la solution de sels métalliques et l'addition goutte à goutte de la suspension de précurseur d'alumine et l'ajustement simultané de la valeur de pH à 6,5 à 11, en particulier à 8 à 10,5, de manière particulièrement préférée à 8,5 à 10 ; ou
c3) la présentation de la suspension de précurseur d'alumine et l'addition goutte à goutte simultanée de la solution de sels métalliques et de la solution ammoniacale pour respecter une valeur de pH de 6,5 à 11, en particulier de 8 à 10,5, de manière particulièrement préférée de 8,5 à 10.

**6.** - Procédé selon au moins l'une des revendications précédentes, dans lequel

la suspension provenant de (c) est soumise à un vieillissement hydrothermal en environnement aqueux à au moins 120°C et pendant au moins 4 h, et/ou
la suspension provenant de (c) est filtrée après le vieillissement hydrothermal et, de préférence, la matière solide est ensuite lavée avec de l'eau désionisée.

**7.** - Procédé selon au moins l'une des revendications précédentes, dans lequel on utilise des sels de métaux solubles dans l'eau pour la préparation de la solution de sels métalliques, en particulier par exemple des acétates, des nitrates et/ou des chlorures.

**8.** - Procédé selon au moins l'une des revendications précédentes, dans lequel l'oxyde de Ce/Zr (le cas échéant de terres rares) se présente sous la forme d'une « solid solution » (solution solide) dans le composite, et l'$Al_2O_3$ et les oxydes mixtes de Ce-Zr-(le cas échéant de terres rares) coexistent en répartition homogène.

**9.** - Procédé selon au moins l'une des revendications précédentes, dans lequel on renonce à l'addition de sels alcalins et/ou alcalino-terreux, à l'exception le cas échéant des sels de baryum.

**10.** - Procédé selon au moins l'une des revendications précédentes, dans lequel les boehmites sont dotées de composés organiques, qui présentent au moins un groupe carboxy (-COO ou -COOH) et un ou plusieurs autres groupes choisis parmi des groupes hydroxy (-OH), oxo (O), carboxy (-COO ou -COOH) et/ou amino (-NH ou -$NH_2$), en particulier avec 2 à 12 atomes de C, de manière particulièrement préférée 4 à 8 atomes de C, de préférence dans des proportions en poids de 0,1 à 50 % en poids, en particulier de 5 à 15 % en poids, par rapport au poids sec de la boehmite.

**11.** - Procédé selon au moins l'une des revendications précédentes, dans lequel la suspension comportant de la boehmite est ajustée à la valeur de pH par une base azotée, en particulier de l'ammoniac, de l'urée et/ou de l'urotropine.

**12.** - Procédé selon au moins l'une des revendications précédentes, dans lequel la composition d'oxydes mixtes/composite présente 20 à 80 % en poids d'aluminium, 5 à 80 % en poids de zirconium, 5 à 80 % en poids de cérium et, le cas échéant, 0 à 12 % en poids d'un ou plusieurs métaux des terres rares (RE), calculés en tant qu'$Al_2O_3$, $ZrO_2$, $CeO_2$, $RE_2O_3$.

**13.** - Procédé selon au moins l'une des revendications précédentes, dans lequel les boehmites ou la suspension de boehmite sont préparées par hydrolyse d'un alcoxyde d'aluminium, de préférence avec séparation de l'alcool.

**14.** - Composite d'oxydes d'Al/Ce/Zr comportant de l'oxyde d'aluminium et un oxyde mixte de cérium/zirconium-(le cas échéant de terres rares) sous la forme d'une « solid solution » (solution solide), détectable par diffraction des rayons X sur poudre, dans lequel :

a) l'$Al_2O_3$ et les oxydes mixtes de Ce-Zr-(le cas échéant de terres rares) coexistent en répartition homogène ; et
b) ledit composite d'oxydes d'Al/Ce/Zr est apte à être fabriqué selon au moins l'une des revendications 1 à 13.

**15.** - Composite d'oxydes d'Al/Ce/Zr selon la revendication 14, contenant

- 20 à 80 % en poids, de préférence 40 à 70 % en poids d'aluminium, calculé en tant qu'$Al_2O_3$ ;

- 5 à 80 % en poids, de préférence 5 à 40 % en poids de zirconium, calculé en tant que $ZrO_2$ ;
- 5 à 80 % en poids, de préférence 5 à 40 % en poids de cérium, calculé en tant que $CeO_2$ ; et
- 0 à 12 % en poids, de préférence 0,1 à 9 % en poids d'un ou de plusieurs métaux de terres rares (RE), calculés en tant que $RE_2O_3$.

16. - Composite d'oxydes d'Al/Ce/Zr selon l'une des revendications 14 ou 15, présentant également après 4 h à 1200°C encore des surfaces d'au moins 20 $m^2$/g, de préférence d'au moins 40 $m^2$/g, mesurées selon BET.

17. - Composite d'oxydes d'Al/Ce/Zr selon au moins l'une des revendications 14 à 16, ledit composite d'oxydes d'Al/Ce/Zr étant un composite d'oxydes d'Al/Ce/Zr/terres rares et comportant comme oxydes de terres rares des oxydes de néodyme, de praséodyme, d'yttrium et/ou de lanthane.

18. - Composite d'oxydes d'Al/Ce/Zr selon au moins l'une des revendications 14 à 17, présentant en outre du platine, du rhodium et/ou du palladium.

## Fig. 1

EP 3 505 241 B1

## Fig.2

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006070201 A2
- WO 2008113457 A1
- US 6306794 B1
- US 5883037 A
- EP 1172139 A1
- WO 2006119549 A1
- US 6831036 B

- WO 201267654 A1
- US 5055019 A
- EP 1172139 B1
- WO 2012067654 A1
- EP 1172139 A
- WO 2006070201 A